# EUROPEAN PATENT APPLICATION

(11) **EP 4 668 790 A1**
(43) Date of publication of application: **24.12.2025**
(21) Application number: 24756136.8
(22) Date of filing: 05.02.2024
(51) Int. Cl.: H04W 4/02

(54) **INFORMATION TRANSMISSION METHOD AND APPARATUS**

(30) Priority: 17.02.2023 CN 202310133228
(71) Applicant: Datang Mobile Communications Equipment Co., Ltd., Beijing 100085 (CN)
(72) Inventor: REN, Bin, Beijing 100085 (CN); DA, Ren, Beijing 100085 (CN); GAO, Qiubin, Beijing 100085 (CN); REN, Xiaotao, Beijing 100085 (CN)
(74) Representative: Studio Torta S.p.A.
(86) International application number: PCT/CN2024/076173
(87) International publication number: WO 2024/169762

(57) **Abstract**

The present disclosure discloses an information transmission method and apparatus, to achieve the effect of improving communication performance of a new radio system through terminal location-related information used for assisting in improving the communication performance of the new radio system. For an information requesting party of a new radio system, an information transmission method provided by the present disclosure includes: sending a request message, where the request message is used to acquire terminal location-related information used for assisting in improving communication performance of the new radio system; acquiring the terminal location-related information.

## Description

### CROSS-REFERENCES TO RELATED APPLICATIONS

The present disclosure claims priority to Chinese patent application No. 202310133228.7, filed to China National Intellectual Property Administration on February 17, 2023 and entitled "INFORMATION TRANSMISSION METHOD AND APPARATUS", which is hereby incorporated by reference in its entirety.

### TECHNICAL FIELD

The present disclosure relates to the field of communication technologies and, in particular, to an information transmission method and apparatus.

### BACKGROUND

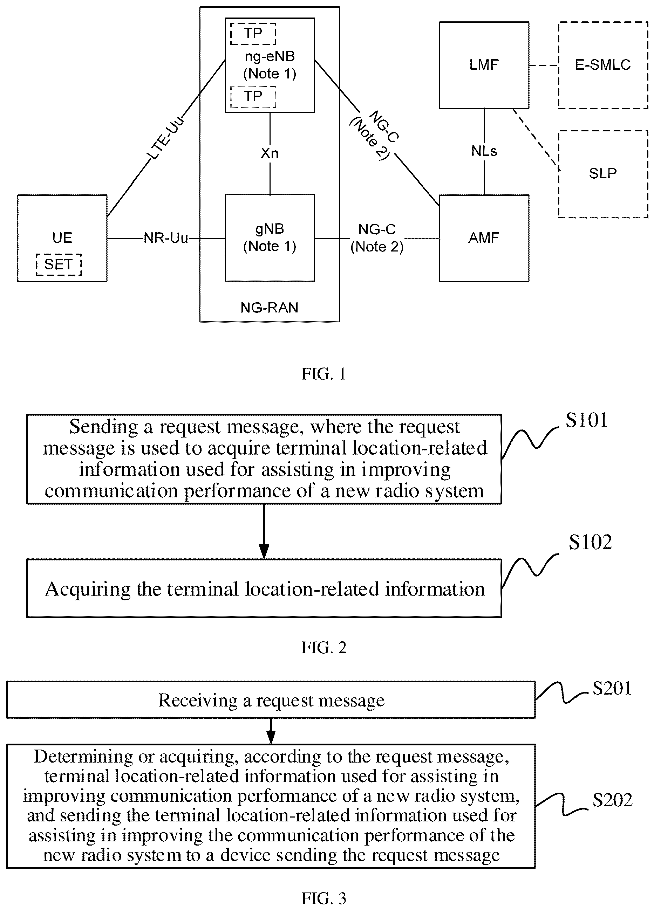

A positioning architecture for a user equipment (UE, User Equipment) in a new generation radio access network (NG-RAN, New Generation Radio Access Network) system is as shown in FIG. 1. The network side includes a base station (gNB, NG-gNB), an access management function (AMF, Access and Mobility Management Function) entity, a location management function (LMF, Location Management Function) entity and other devices.

However, there is no relevant solution in the prior art to improve communication performance of new radio systems through terminal location-related information.

### SUMMARY

Embodiments of the present disclosure provide an information transmission method and apparatus, to achieve the effect of improving communication performance of a new radio system through terminal location-related information used for assisting in improving the communication performance of the new radio system.

For an information requesting party, an embodiment of the present disclosure provides an information transmission method, including:
sending a request message, where the request message is used to acquire terminal location-related information used for assisting in improving communication performance of a new radio system;
acquiring the terminal location-related information.

Through this method, the request message that is used to acquire the terminal location-related information used for assisting in improving the communication performance of the new radio system is sent, and the terminal location-related information is acquired, so that the effect of improving the communication performance of the new radio system can be achieved through the terminal location-related information used for assisting in improving the communication performance of the new radio system.

In some embodiments, the terminal location-related information used for assisting in improving the communication performance of the new radio system includes at least one of first-type location-related information, second-type location-related information or third-type location-related information of a terminal for assisting in improving the communication performance of the new radio system.

In some embodiments, the first-type location-related information includes at least one of the following information:
beam information of a target terminal relative to a target base station; or,
distance of the target terminal relative to the target base station; or,
information of a base station closest to the target terminal.

In some embodiments, the second-type location-related information includes: positioning measurement quantities of different base stations reported by a target terminal, and/or a positioning measurement quantity of the target terminal reported by a base station.

In some embodiments, acquiring the terminal location-related information used for assisting in improving the communication performance of the new radio system includes:
acquiring the first-type location-related information and/or the second-type location-related information provided by a location management function entity;
or, acquiring at least one of the following information provided by a joint positioning and communication function entity: the first-type location-related information, the second-type location-related information, or the third-type location-related information.

In some embodiments, after acquiring the terminal location-related information used for assisting in improving the communication performance of the new radio system, the method further includes:
performing processing related to improving the communication performance of the new radio system, based on the terminal location-related information used for assisting in improving the communication performance of the new radio system.

In some embodiments, performing the processing related to improving the communication performance of the new radio system, based on the terminal location-related information used for assisting in improving the communication performance of the new radio system, includes:
performing, by a serving base station of the terminal, at least one of the following operations for the terminal based on the terminal location-related information used for assisting in improving the communication performance of the new radio system: channel estimation, cell handover, user scheduling, resource allocation, or beamforming;
or, performing, by the terminal, at least one of the following operations based on the terminal location-related information used for assisting in improving the communication performance of the new radio system: beamforming, channel estimation, cell selection, or cell reselection.

For an information feedback party, an embodiment of the present disclosure provides an information transmission method, including:
receiving a request message;
determining or acquiring, according to the request message, terminal location-related information used for assisting in improving communication performance of a new radio system, and sending the terminal location-related information used for assisting in improving the communication performance of the new radio system to a device sending the request message.

In some embodiments, acquiring the terminal location-related information used for assisting in improving the communication performance of the new radio system includes:
locally reading the terminal location-related information that is preset and used for assisting in improving the communication performance of the new radio system; or,
directly acquiring the terminal location-related information that is reported by a terminal and used for assisting in improving the communication performance of the new radio system; or,
acquiring the terminal location-related information that is forwarded by a network entity and used for assisting in improving the communication performance of the new radio system, where the terminal location-related information forwarded by the network entity is reported by the terminal.

In some embodiments, determining the terminal location-related information used for assisting in improving the communication performance of the new radio system includes:
determining, directly and locally, the terminal location-related information used for assisting in improving the communication performance of the new radio system;
or, acquiring and using information provided by a network entity to determine the terminal location-related information used for assisting in improving the communication performance of the new radio system.

In some embodiments, the method further includes:
providing, according to a user privacy request of a terminal and authorization information, location-related information of the terminal to a serving base station of the terminal.

For an information requesting party, an embodiment of the present disclosure provides an information transmission apparatus, including a memory, a transceiver and a processor:
the memory is configured to store a computer program; the transceiver is configured to transceive data under control of the processor; the processor is configured to read the computer program in the memory and perform the following operations:
sending a request message, where the request message is used to acquire terminal location-related information used for assisting in improving communication performance of a new radio system;
acquiring the terminal location-related information.

In some embodiments, the terminal location-related information used for assisting in improving the communication performance of the new radio system includes at least one of first-type location-related information, second-type location-related information or third-type location-related information of a terminal for assisting in improving the communication performance of the new radio system.

In some embodiments, the first-type location-related information includes at least one of the following information:
beam information of a target terminal relative to a target base station; or,
distance of the target terminal relative to the target base station; or,
information of a base station closest to the target terminal.

In some embodiments, the second-type location-related information includes: positioning measurement quantities of different base stations reported by a target terminal, and/or a positioning measurement quantity of the target terminal reported by a base station.

In some embodiments, acquiring the terminal location-related information used for assisting in improving the communication performance of the new radio system includes:
acquiring the first-type location-related information and/or the second-type location-related information provided by a location management function entity;
or, acquiring at least one of the following information provided by a joint positioning and communication function entity: the first-type location-related information, the second-type location-related information, or the third-type location-related information.

In some embodiments, the processor is further configured to read the computer program in the memory and perform the following operation:
after acquiring the terminal location-related information used for assisting in improving the communication performance of the new radio system, performing processing related to improving the communication performance of the new radio system, based on the terminal location-related information used for assisting in improving the communication performance of the new radio system.

In some embodiments, performing the processing related to improving the communication performance of the new radio system, based on the terminal location-related information used for assisting in improving the communication performance of the new radio system, includes:
performing, by a serving base station of the terminal, at least one of the following operations for the terminal based on the terminal location-related information used for assisting in improving the communication performance of the new radio system: channel estimation, cell handover, user scheduling, resource allocation, or beamforming;
or, performing, by the terminal, at least one of the following operations based on the terminal location-related information used for assisting in improving the communication performance of the new radio system: beamforming, channel estimation, cell selection, or cell reselection.

Correspondingly, for an information feedback party, an embodiment of the present disclosure provides an information transmission apparatus, including:
a memory, configured to store a computer program; a transceiver, configured to transceive data under control of a processor; the processor, configured to read the computer program in the memory and perform the following operations:
receiving a request message;
determining or acquiring, according to the request message, terminal location-related information used for assisting in improving communication performance of a new radio system, and sending the terminal location-related information used for assisting in improving the communication performance of the new radio system to a device sending the request message.

In some embodiments, acquiring the terminal location-related information used for assisting in improving the communication performance of the new radio system includes:
locally reading the terminal location-related information that is preset and used for assisting in improving the communication performance of the new radio system; or,
directly acquiring the terminal location-related information that is reported by a terminal and used for assisting in improving the communication performance of the new radio system; or,
acquiring the terminal location-related information that is forwarded by a network entity and used for assisting in improving the communication performance of the new radio system, where the terminal location-related information forwarded by the network entity is reported by the terminal.

In some embodiments, determining the terminal location-related information used for assisting in improving the communication performance of the new radio system includes:
determining, directly and locally, the terminal location-related information used for assisting in improving the communication performance of the new radio system;
or, acquiring and using information provided by a network entity to determine the terminal location-related information used for assisting in improving the communication performance of the new radio system.

In some embodiments, the processor is further configured to read the computer program in the memory and perform the following operation:
providing, according to a user privacy request of a terminal and authorization information, location-related information of the terminal to a serving base station of the terminal.

For an information requesting party, an embodiment of the present disclosure provides an information transmission apparatus, including:
a request message sending unit, configured to send a request message, where the request message is used to acquire terminal location-related information used for assisting in improving communication performance of a new radio system;
an acquisition unit, configured to acquire the terminal location-related information.

Correspondingly, for an information feedback party, an embodiment of the present disclosure provides another information transmission apparatus, including:
a request message receiving unit, configured to receive a request message;
a feedback unit, configured to determine or acquire, according to the request message, terminal location-related information used for assisting in improving communication performance of a new radio system, and send the terminal location-related information used for assisting in improving the communication performance of the new radio system to a device sending the request message.

Another embodiment of the present disclosure provides a processor-readable storage medium. The processor-readable storage medium stores a computer program, and the computer program is used to cause the processor to perform any of the methods described above.

### BRIEF DESCRIPTION OF THE DRAWINGS

In order to explain technical solutions in embodiments of the present disclosure more clearly, drawings required to be used in the description of the embodiments will be introduced briefly in the following. It is obvious that the drawings in the following description are some embodiments of the present disclosure. For those ordinarily skilled in the art, other drawings may also be obtained according to these drawings without creative efforts.
FIG. 1 is a schematic diagram of a positioning architecture of a UE in an NG-RAN system.
FIG. 2 is a schematic flowchart of an information transmission method on a first device (information requesting party) side according to an embodiment of the present disclosure.
FIG. 3 is a schematic flowchart of an information transmission method on a second device (information feedback party) side according to an embodiment of the present disclosure.
FIG. 4 is a schematic diagram of an information transmission process when a second device (information feedback party) is an LMF according to an embodiment of the present disclosure.
FIG. 5a is a schematic diagram of an information transmission process when a second device for UE-assisted positioning is joint positioning and communication (JPAC, Joint Positioning And Communication) according to an embodiment of the present disclosure.
FIG. 5b is a schematic diagram of an information transmission process when a second device for UE-based positioning is JPAC according to an embodiment of the present disclosure.
FIG. 6 is a schematic structural diagram of an information transmission apparatus on a network side according to an embodiment of the present disclosure.
FIG. 7 is a schematic structural diagram of an information transmission apparatus on a terminal side according to an embodiment of the present disclosure.
FIG. 8 is a schematic structural diagram of an information transmission apparatus on a first device (information feedback party) side according to an embodiment of the present disclosure.
FIG. 9 is a schematic structural diagram of an information transmission apparatus on a second device (information feedback party) side according to an embodiment of the present disclosure.

### DESCRIPTION OF EMBODIMENTS

In the embodiments of the present disclosure, the term "and/or" describes an association relationship of associated objects, and means that there may be three types of relationships. For example, A and/or B may represent three situations, namely, A exists alone, A and B exist at the same time, and B exists alone. The character "/" generally means that the associated objects before and after the character are of an "or" relationship.

In the embodiments of the present disclosure, the term "multiple" refers to two or more, and other quantifiers are similar.

The technical solutions in the embodiments of the present disclosure will be described clearly and comprehensively in combination with accompanying drawings in the embodiments of the present disclosure. Obviously, the described embodiments are only part of the embodiments of the present disclosure, not all of them. All other embodiments obtained by those ordinarily skilled in the art based on the embodiments of the present disclosure without creative efforts fall within the protection scope of the present disclosure.

Embodiments of the present disclosure provide information transmission methods and apparatuses, to achieve the effect of improving communication performance of a new radio system through terminal location-related information used for assisting in improving the communication performance of the new radio system.

The methods and the apparatuses are based on the same application concept. Since the methods and the apparatuses solve the problems with similar principles, cross reference can be made to each other for the implementations of the apparatuses and the methods, which will not be repeated here.

The terms "first", "second" and/or the like (if any) in the description of embodiments of the present disclosure, claims and the accompanying drawings are used to distinguish similar objects, and are not necessarily to describe a specific order or sequence. It should be understood that data so used may be interchanged where appropriate, so that the embodiments described herein can be implemented in an order other than those illustrated or described herein. In addition, the terms "including" and "having", and any variations thereof, are intended to cover non-exclusive inclusions. For example, a process, method, system, product or device that includes a series of steps or units is not necessarily limited to those steps or units that are clearly listed, but may include other steps or units that are not clearly listed or inherent to such process, method, product or device.

The following examples and embodiments are only understood as illustrative examples. Although the description may mention "a/an", "one" or "some" examples or embodiments in several places, this does not mean that each such mention is related to the same example or embodiment, nor that the feature only applies to a single example or embodiment. Individual features of different embodiments may also be combined to provide other embodiments. In addition, terms such as "including" and "comprising" should be understood as not limiting the described embodiments to consist of only those features already mentioned. Such examples and embodiments may also include features, structures, units, modules, etc. that are not specifically mentioned.

The technical solutions provided by the embodiments of the present disclosure may be applied to various systems, especially a 5G system. For example, an applicable system may be a global system of mobile communication (Global System of Mobile communication, GSM), a code division multiple access (Code Division Multiple Access, CDMA) system, a wideband code division multiple access (Wideband Code Division Multiple Access, WCDMA) general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a long term evolution advanced (Long Term Evolution Advanced, LTE-A) system, a universal mobile telecommunication system (Universal Mobile Telecommunication System, UMTS), a worldwide interoperability for microwave access (Worldwide Interoperability for Microwave Access, WiMAX) system, a 5G new radio (New Radio, NR) system, etc. Each of these various systems includes a terminal device and a network device. The systems may also include a core network part, such as an evolved packet system (evolved packet system, EPS), a 5G system (5GS), etc.

The terminal device involved in the embodiments of the present disclosure may refer to a device that provides voice and/or data connectivity to a user, a handheld device with a wireless connection function, or other processing devices connected to a wireless modem. The terminal device may vary in name in different systems. For example, in the 5G system, the terminal device may be called a user equipment (User Equipment, UE). A wireless terminal device may communicate with one or more core networks (Core Networks, CNs) via a RAN. The wireless terminal device may be a mobile terminal device, such as a mobile phone (or "cellular" phone) and a computer with a mobile terminal device. For example, the mobile terminal device may be portable, pocket-sized, handheld, computer built-in or vehicle-mounted mobile apparatuses, which exchange language and/or data with the radio access network, such as a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA) and other devices. The wireless terminal device may also be called a system, a subscriber unit (subscriber unit), a subscriber station (subscriber station), a mobile station (mobile station), a mobile (mobile), a remote station (remote station), an access point (access point), a remote terminal device (remote terminal), an access terminal device (access terminal), a user terminal device (user terminal), a user agent (user agent), a user device (user device), which is not limited in the embodiments of the present disclosure.

The network device involved in the embodiments of the present disclosure may be a base station, and the base station may include multiple cells. Depending on specific applications, the base station may also be called an access point, or a device in an access network that communicates with a wireless terminal device through one or more sectors over an air interface, or other names. The network device may be configured to exchange a received over-the-air frame with an Internet protocol (Internet Protocol, IP) packet, and act as a router between the wireless terminal device and the rest of the access network, where the rest of the access network may include an Internet protocol (IP) communication network. The network device may also coordinate property management of the air interface. For example, the network device involved in the embodiments of the present disclosure may be a network device (Base Transceiver Station, BTS) in a global system for mobile communications (GSM) or code division multiple access (CDMA), or a network device (NodeB) in wide-band code division multiple access (WCDMA), or an evolutional network device (evolutional Node B, eNB or e-NodeB) in a long term evolution (LTE) system, or a 5G base station in a 5G network architecture (next generation system), or may be a home evolved base station (Home evolved Node B, HeNB), a relay node (relay node), a home base station (femto), a pico base station (pico), etc., which is not limited in the embodiments of the present disclosure. In some network structures, the network device may include a centralized unit (centralized unit, CU) node and a distributed unit (distributed unit, DU) node, and the centralized unit and the distributed unit may also be geographically separated.

The network device and the terminal device may respectively use one or more antennas for multi input multi output (Multi Input Multi Output, MIMO) transmission therebetween, and the MIMO transmission may be single user MIMO (Single User MIMO, SU-MIMO) or multiple user MIMO (Multiple User MIMO, MU-MIMO). Depending on the morphology and number of root antenna combinations, the MIMO transmission may be 2D-MIMO, 3D-MIMO, FD-MIMO or massive-MIMO, and may also be diversity transmission or precoding transmission or beamforming transmission, etc.

Embodiments of the present disclosure are described in detail below in conjunction with the accompanying drawings. It should be noted that the display order of the embodiments of the present disclosure only represents the order of the embodiments, and does not indicate whether the technical solutions provided by the embodiments are preferred or not.

The positioning architecture of a UE in an NG-RAN system shown in FIG. 1 has the following problems.

First, positioning measurement quantities of downlink positioning and joint uplink-downlink positioning are directly reported to an LMF by the UE, which is transparent transmission for a serving base station, and the serving base station cannot obtain the information of the aforementioned positioning measurement quantities. The positioning measurement quantity includes, for example, reference signal time difference (RSTD, Reference Signal Time Difference), UE transmitting and receiving time difference, reference signal receiving power (RSRP, Reference Signal Receiving Power), reference signal received path power (RSRPP, Reference Signal Received Path Power), etc.

Second, uplink measurement quantities of a neighboring base station of uplink positioning and joint uplink-downlink positioning are directly reported to the LMF by the neighboring base station, and the serving base station cannot obtain the information of the positioning measurement quantities of the neighboring base station. The uplink measurement quantity includes, for example, relative time of arrival (RTOA, Relative Time of Arrival), gNB transmitting and receiving time difference, RSRP, RSRPP, etc.

Third, for UE-assisted (UE-assisted) positioning, a UE position calculation function is completed at the LMF. For UE-based (UE-based) positioning, the UE position calculation function is completed at the UE. Therefore, the serving base station cannot obtain UE location information.

At present, a 3GPP new radio (NR, New Radio) system does not support the use of UE location-related information (including information such as approximate or accurate UE location and direction, positioning measurement quantity, etc.) to assist in improving communication performance. To this end, the embodiments of the present disclosure propose a transmission method of terminal location information used for assisting in improving communication performance of a new radio system, so that processing related to improving the communication performance of the new radio system can be performed based on the terminal location information used for assisting in improving the communication performance of the new radio system.

Referring to FIG. 2, on a first device side (an information requesting party), embodiments of the present disclosure provide an information transmission method, including:
S101: sending a request message, where the request message is used to acquire terminal location-related information used for assisting in improving communication performance of a new radio system;
S102: acquiring the terminal location-related information.

The first device described in the embodiments of the present disclosure may be a network-side device (such as a base station, etc.) or may be a terminal-side device. As the information requesting party, the first device acquires, by requesting, the terminal location-related information used for assisting in improving the communication performance of the new radio system, and can subsequently perform operations (examples of specific operations will be provided later) to assist in improving the communication performance of the new radio system based on the acquired terminal location-related information used for assisting in improving the communication performance of the new radio system, so that the effect of improving the communication performance of the new radio system can be achieved.

Correspondingly, in the embodiments of the present disclosure, an information feedback party is referred to as a second device. Similarly, the second device may also be a network-side device or a terminal-side device. For example, as the information feedback party, the second device may be an LMF entity apparatus (LMF for short) on the network side, or may be a joint positioning and communication (JPAC, Joint Positioning And Communication) function entity apparatus (JPAC for short) on the network side. The JPAC may be a standalone entity apparatus of core network and access network devices that is independent of the LMF and a serving base station. The JPAC may also not be a standalone entity apparatus, but an existing entity apparatus such as the serving base station or the LMF undertakes its functions, that is, the JPAC serves as a functional module in the serving base station or in the LMF.

That is, in the embodiments of the present disclosure, the first device in the NR system requests, from the second device, to acquire the terminal location-related information used for assisting in improving the communication performance of the new radio system (hereinafter referred to as location-related information of a target UE), and performs, based on the acquired location-related information of the target UE, processing of improving the communication performance of the NR system, such as assisting in improving the accuracy of serving cell handover of the target UE, scheduling for the target UE (i.e., user scheduling), resource allocation, or beamforming, improving the accuracy of physical layer channel estimation, cell selection, or cell reselection, correction of a path loss formula for power control calculation, etc.

In some embodiments, the terminal location-related information used for assisting in improving the communication performance of the new radio system includes at least one of first-type location-related information, second-type location-related information or third-type location-related information of a terminal for assisting in improving the communication performance of the new radio system.

In some embodiments:
the first-type location-related information is, for example, not accurate target UE location information;
the second-type location-related information is, for example, positioning measurement quantity information of the target UE;
the third-type location-related information is, for example, accurate target UE location information.

In some embodiments, the LMF may support the first-type and second-type location-related information, and the JPAC may support all three types of information mentioned above.

In some embodiments, the first-type location-related information is used for serving cell handover, user scheduling, resource allocation, and assisted beam forming (beam forming), etc.

In some embodiments, the first-type location-related information includes at least one of the following:
beam information of a target terminal relative to a target base station, such as a beam direction of the target UE relative to the target base station; or,
distance of the target terminal relative to the target base station; or,
information of a base station closest to the target terminal.

It can be seen that the first-type location-related information is not specific target UE location information.

In some embodiments, the second-type location-related information is positioning measurement quantity information, used for accurate physical layer channel estimation, correction of a path loss formula for power control calculation, user scheduling, and resource allocation, etc.

In some embodiments, the second-type location-related information includes (distinguished according to reporting entities): positioning measurement quantities of different base stations reported by the target terminal, and/or a positioning measurement quantity of the target terminal reported by a base station.

In some embodiments, the positioning measurement quantities of different base stations reported by the target terminal are, for example, relative delay of multiple paths (i.e., uplink relative time of arrival, UL RTOA), uplink angle of arrival (UL Angle of Arrival, UL AoA), uplink sounding reference signal (Sounding Reference Signal, SRS) receiving power (UL SRS-RSRP), uplink sounding reference signal receiving path power (UL SRS-RSRPP), UE transmitting and receiving time difference, etc.

The positioning measurement quantity of the target terminal reported by the base station is, for example, downlink reference signal time difference (Downlink Reference Signal Time Difference, DL-RSTD), downlink positioning reference signal (Positioning Reference Signal, PRS) receiving power (DL PRS-RSRP), downlink positioning reference signal receiving path power (DL PRS-RSRPP) of multiple paths, base station transmitting and receiving time difference, etc.

Or, in some embodiments, the second-type location-related information may also be distinguished according to positioning methods, and includes: a downlink positioning measurement quantity, an uplink positioning measurement quantity, and an uplink-downlink positioning measurement quantity.

The downlink positioning measurement quantity includes, for example, DL RSTD, DL PRS-RSRP, DL PRS-RSRPP of multiple paths, etc.

The uplink positioning measurement quantity includes, for example, relative delay of multiple paths (UL RTOA), UL AoA, UL SRS-RSRP, UL SRS-RSRPP.

Each measurement quantity is from a serving base station/serving cell/serving TRP, or from a neighboring base station/neighboring cell/neighboring TRP.

The uplink-downlink positioning measurement quantity includes UE transmitting and receiving time difference and base station transmitting and receiving time difference.

In some embodiments, the third-type location-related information is accurate target UE location information and is used for accurate handover, user scheduling, resource allocation, and assisted beamforming. The target UE location information is related to one or more factors such as a 3GPP standard release supported by the target UE, a positioning technical solution, wireless channel environment.

In some embodiments, in order to protect user privacy security, the LMF is not supported to provide accurate location information of the target UE to the serving base station. However, based on the uplink-downlink positioning measurement quantities of the UE and/or the base station provided by the LMF, as well as base station coordinate information, the JPAC may calculate relatively accurate UE location information and notify the same to the serving base station for accurate handover, user scheduling, resource allocation, and assisted beamforming. Therefore, in some embodiments, acquiring the terminal location-related information used for assisting in improving the communication performance of the new radio system includes:
acquiring the first-type location-related information and/or the second-type location-related information provided by a location management function entity;
or, acquiring at least one of the following information provided by a joint positioning and communication function entity: the first-type location-related information, the second-type location-related information, or the third-type location-related information.

That is, the LMF may support the first-type and second-type location-related information mentioned above, and the JPAC may support all three types of information mentioned above.

In some embodiments, after acquiring the terminal location-related information used for assisting in improving the communication performance of the new radio system, the method further includes:
performing processing related to improving the communication performance of the new radio system, based on the terminal location-related information used for assisting in improving the communication performance of the new radio system.

In some embodiments, performing processing related to improving the communication performance of the new radio system, based on the terminal location-related information used for assisting in improving the communication performance of the new radio system, includes:
performing, by the serving base station of the terminal, at least one of the following operations for the terminal based on the terminal location-related information used for assisting in improving the communication performance of the new radio system: channel estimation, cell handover, user scheduling, resource allocation, or beamforming;
or, performing, by the terminal, at least one of the following operations based on the terminal location-related information used for assisting in improving the communication performance of the new radio system: beamforming, channel estimation, cell selection, or cell reselection.

For example, in some embodiments, after acquiring the above three types of location-related information, the first device operates respectively as follows.

If the first device is the serving base station, after acquiring the location-related information of the target UE, the serving base station performs at least one of the following operations for the UE: channel estimation, cell handover, user scheduling, resource allocation, or beamforming.

In some embodiments, for the first-type location-related information, the serving base station may operate as follows.

Example 1.1: assisted beamforming. The serving base station determines a beam factor for downlink transmitting or a beam factor for uplink receiving based on terminal beam information sent by the LMF or the JPAC (such as the beam direction of the target UE relative to the target base station).

Example 1.2: mobility management (such as handover). The serving base station determines the target base station for target UE handover based on information sent by the LMF or the JPAC about which base station is closest to the target UE, for subsequent handover processing for the target UE.

In some embodiments, for the second-type location-related information, the serving base station may operate as follows.

Example 2.1: the serving base station determines a channel estimation algorithm parameter by using the relative delay of multiple paths, UL SRS-RSRPP and UL AoA information, such as determining a time-frequency domain correlation matrix of an uplink minimum mean square error (MMSE, Minimum Mean Square Error) channel estimation algorithm.

Example 2.2: the serving base station performs MU-MIMO scheduling based on the UL SRS-RSRP and UL AoA information, and schedules multiple UEs with sufficiently large UL SRS-RSRP (the UL SRS-RSRP greater than a preset threshold) and significant UL AoA angle discrimination (the UL AoA greater than a preset threshold) together, for downlink multiple users multiple in multiple out (Multiple Users Multiple In Multiple Out, MU-MIMO) transmission.

Example 2.3: the serving base station performs user scheduling and time-frequency domain resource allocation based on UL SRS-RSRP and/or UL SRS-RSRPP values in combination with maximum criteria such as the signal to interference plus noise ratio (Signal to Interference plus Noise Ratio, SINR) in communication channel measurement.

In some embodiments, for the third-type location-related information, the serving base station may perform accurate assisted beamforming, handover, user scheduling, and resource allocation.

If the first device is the target UE, after acquiring the location-related information of the target UE, the target UE performs at least one of the following operations for the target UE: beamforming, channel estimation, cell selection, or cell reselection.

For example, an uplink transmitting beam for sending a signal to the target base station is determined, or a downlink receiving beam for receiving a signal from the target base station is determined.

For example, the UE determines a channel estimation algorithm parameter by using the relative delay of multiple paths and the DL PRS-RSRPP of multiple paths, such as determining a time-frequency domain correlation matrix of a minimum mean square error (MMSE, Minimum Mean Square Error) channel estimation algorithm.

Correspondingly, referring to FIG. 3, on a second device side (an information feedback party), embodiments of the present disclosure provide an information transmission method, including:
S201: receiving a request message;
S202: determining or acquiring, according to the request message, terminal location-related information used for assisting in improving communication performance of a new radio system, and sending the terminal location-related information used for assisting in improving the communication performance of the new radio system to a device sending the request message. The determining may be determining through calculation, and may also be directly reading those locally preset (i.e. pre-stored).

That is, for example, the second device determines the location-related information of the target UE (for UE-assisted positioning) or acquires the location-related information of the target UE (for UE-based positioning), according to the request message from the first device. Furthermore, the location-related information of the target UE is fed back to the first device.

In some embodiments, acquiring the terminal location-related information (applicable to the above-mentioned various types of terminal location-related information) used for assisting in improving the communication performance of the new radio system includes:
locally reading the terminal location-related information that is preset and used for assisting in improving the communication performance of the new radio system; for example, for the second-type location-related information, the LMF directly reads it locally and feeds it back to the serving base station or the UE;
or, directly acquiring the terminal location-related information that is reported by the terminal and used for assisting in improving the communication performance of the new radio system; for example, for the first-type location-related information, the LMF or the JPAC directly acquires the location-related information for the target UE that is reported by the target UE (for UE-based positioning) and feeds it back to the serving base station or the UE; for another example, for the third-type location-related information, the JPAC directly acquires accurate target UE location information reported by the target UE (for UE-based positioning) and feeds it back to the serving base station or the UE;
or, acquiring the terminal location-related information that is forwarded by a network entity (such as the LMF) and used for assisting in improving the communication performance of the new radio system, where the terminal location-related information forwarded by the network entity is reported by the terminal; for example, the JPAC acquires the second-type location-related information forwarded by the LMF and feeds it back to the serving base station or the UE.

In some embodiments, determining the terminal location-related information (applicable to the above-mentioned various types of terminal location-related information) used for assisting in improving the communication performance of the new radio system includes:
determining, directly and locally, the terminal location-related information used for assisting in improving the communication performance of the new radio system; for example, for the first-type location-related information, the LMF feeds back the location-related information of the target UE determined through internal processing (for UE-assisted positioning) to the serving base station or the UE;
or, acquiring and using information provided by a network entity to determine the terminal location-related information used for assisting in improving the communication performance of the new radio system; for example, for the first-type location-related information, after acquiring related information from the LMF for internal processing, the JPAC determines the location-related information of the target UE (for UE-assisted positioning), and feeds it back to the serving base station or the UE; for another example, for the third-type location-related information, the JPAC determines relatively accurate target UE location information (for UE-assisted positioning) according to uplink, downlink, and/or uplink-downlink positioning measurement quantities of the UE and/or the base station provided by the LMF, and feeds it back to the serving base station or UE.

In some embodiments, the method further includes:
providing, according to a user privacy request of a terminal and authorization information, location-related information of the terminal to the serving base station of the terminal; for example, the JPAC may provide accurate location information of the target UE to the serving base station according to a user privacy request and authorization from the target UE.

To sum up, on the second device side, for example:
in some embodiments, for UE-based positioning, the second device may acquire the location-related information of the target UE by using one of the following methods.

First, when the second device is the LMF, the target UE reports the terminal location-related information of the above three types obtained by calculation to the LMF through an LTE positioning protocol (LTE Positioning Protocol, LPP) signaling.

Second, when the second device is the JPAC entity, the target UE directly reports the terminal location-related information of the above three types to the JPAC entity; or, the target UE reports the terminal location-related information of the above three types obtained by calculation to the LMF through the LPP signaling, and the LMF further forwards the terminal location-related information of the above three types to the JPAC entity.

In some embodiments, when the JPAC entity is located at the serving base station, a reporting signaling is an NR radio resource control (Radio Resource Control, RRC) signaling.

In some embodiments, for the first-type location-related information, the LMF feeds back the location-related information of the target UE, which is determined through internal processing (for UE-assisted positioning) or acquired through reporting by the target UE (for UE-based positioning), to the serving base station of the target UE or the target UE. Or, the JPAC feeds back the location-related information of the target UE, which is determined after acquiring related information from the LMF and performing internal processing on it (for UE-assisted positioning) or reported by the target UE (for UE-based positioning), to the serving base station or the UE. Examples 1.1-1.4 below are applicable to UE-assisted positioning, and Example 1.5 is applicable to UE-based positioning.

Example 1.1: assisted beamforming. The base station actually needs to know angle information (beam (beam) information) of a line of sight (Line of Sight, LOS) path from the terminal to the base station and/or a transmission point (TRP). The base station sends its own location and/or antenna array orientation information to the LMF, or the LMF further forwards it to the JPAC. The LMF or the JPAC may send the beam information of the target UE required by the base station to the base station, and the base station then performs subsequent processing based on it.

Example 1.2: mobility management (such as: handover or cell selection/reselection). Several neighboring base stations send information such as approximate location of the UE, orientation of the UE, and/or received signal power of the UE to the LMF, or the LMF further forwards it to the JPAC. The LMF or the JPAC may return information about which base station is closest to the terminal (for example, the received signal strength RSRP value thereof is the maximum) or the like to assist the base station in mobility management, or assist the UE in cell selection and/or reselection.

Example 1.3: downlink power allocation and/or uplink power control. The serving base station sends information such as approximate location of the UE, orientation of the UE, and/or received signal power of the UE to the LMF, or the LMF further forwards it to the JPAC. The LMF or the JPAC may return distance information between the terminal and the serving base station to assist the serving base station in downlink power allocation and/or uplink power control.

Example 1.4: uplink-downlink user scheduling, resource allocation, and/or interference management. Several neighboring base stations send information such as approximate location of the UE, orientation of the UE, and/or received signal power information of the UE to the LMF, or the LMF further forwards it to the JPAC. The LMF or the JPAC may return distance information between the terminal and the base station to assist the serving base station in uplink-downlink user scheduling, resource allocation, and/or interference management.

Example 1.5: in Examples 1.1-1.4, accurate UE location information is reported by the target UE to the second device (including the LMF and/or the JPAC), for example, using one of the following methods:
first, the target UE reports the calculated third-type location-related information to the LMF through the LPP signaling, and optionally, the LMF further forwards it to the JPAC entity;
second, the target UE directly reports the calculated third-type location-related information to the JPAC entity.

In some embodiments, for the second-type location-related information, the LMF directly feeds it back to the serving base station or the UE, or the JPAC forwards it to the serving base station or the UE after acquiring it from the LMF or the target UE.

In some embodiments, for the third-type location-related information, the JPAC determines relatively accurate target UE location information (for UE-assisted positioning) (which may also be regarded as accurate target UE location information) according to uplink, downlink, and/or uplink-downlink positioning measurement quantities of the UE and/or the base station provided by the LMF, or the JPAC acquires accurate target UE location information based on reporting by the target UE (for UE-based positioning). Further, the JPAC may provide accurate location information of the target UE to the serving base station according to the user privacy request and authorization from the target UE. The following Examples 3.1-3.3 are applicable to UE-assisted positioning, and Example 3.4 is applicable to UE-based positioning.

Example 3.1: according to an uplink positioning measurement quantity of the base station provided by the LMF and location information of the serving base station, the JPAC determines relatively accurate UE location information by using a method such as UL-TDOA, UL AoA, and/or uplink enhanced cell ID (Enhanced Cell ID, E-CID) positioning, etc.

Example 3.2: according to a downlink positioning measurement quantity of the UE provided by the LMF and location information of the serving base station, the JPAC calculates relatively accurate UE location information by using a method such as DL-TDOA, DL-AoD, and/or downlink E-CID positioning, etc.

Example 3.3: according to uplink-downlink positioning measurement quantities of the UE and the base station provided by the LMF and location information of the serving base station, the JPAC calculates relatively accurate UE location information by using a multi round-trip time (Multi Round-Trip Time, Multi-RTT) positioning method.

Example 3.4: for UE-based positioning, the JPAC acquires accurate target UE location information based on reporting by the target UE. The UE-based positioning method of the target UE may use a RAT-dependent (i.e., the implementation of positioning needs to rely on a 5G network) positioning method such as DL-TDOA and downlink angle-of-departure (Downlink Angle-of-Departure, DL-AoD) in Example 3.2, or a positioning method for which the implementation of positioning does not rely on a 5G network (RAT-independent), such as A-GNSS, Sensor, WLAN, and TBS.

Examples of some specific embodiments are given below with reference to the accompanying drawings.

Embodiment I: the serving base station requests the LMF (UE-assisted positioning) or requests a message from the LMF, where the requesting and the requesting the message represent the same meaning in this embodiment or other related embodiments.

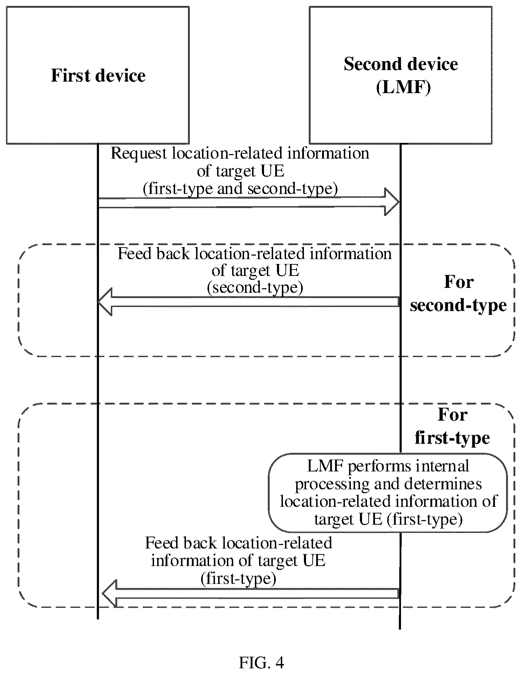

Referring to FIG. 4, Embodiment I provides an example of an operation process when the first device is the serving base station and the second device is the LMF (UE-assisted positioning).

In Embodiment I, it is UE-assisted positioning. The first device is the serving base station, the second device is the LMF, and the location-related information includes the first-type location-related information and the second-type location-related information. That is, the serving base station requests the first-type location-related information and the second-type location-related information from the LMF. Positioning measurement quantity information in the second-type location-related information only includes the downlink positioning measurement quantity.

Step 1: the first device (i.e. the serving base station) requests the location-related information of the target UE from the second device (i.e. the LMF) to assist in improving the communication performance. The requested location-related information includes the following two types of information.

1.1) The first-type location-related information is the location-related information of the target UE, including but not limited to: a beam direction of the target UE relative to the target base station, relative distance information of the target UE relative to the target base station, and information of the base station closest to the UE, used for serving cell handover, user scheduling, resource allocation, and assisted beamforming (beamforming). The first-type location-related information is not specific target UE location information.

1.2) The second-type location-related information is positioning measurement quantity information, which is used for accurate physical layer channel estimation, correction of a path loss formula for power control calculation, user scheduling, and resource allocation. The downlink positioning measurement quantity includes: DL RSTD, DL PRS-RSRP, DL PRS-RSRPP of multiple paths, etc.

Step 2: the second device (i.e. the LMF) determines the location-related information of the target UE according to the request from the first device (i.e. the serving base station), and feeds back the location-related information of the target UE to the first device (i.e. the serving base station).

2.1: For the first-type location-related information, the LMF performs internal processing on it and then feeds it back to the serving base station.

Example 1.1: assisted beamforming. The base station actually needs to know angle information (beam information) of a LOS path from the terminal to the base station/TRP. The base station sends its own location/antenna array orientation information to the LMF, the LMF may send beam information of the target UE required by the base station to the base station, and the base station performs subsequent processing based on it.

Example 1.2: mobility management (such as handover or cell selection/reselection). Several neighboring base stations send information such as approximate location of the UE, orientation of the UE, and/or received signal power of the UE to the LMF. The LMF may return information about which base station is closest to the terminal (for example, the received signal strength RSRP value thereof is the maximum) or the like to assist the base station in mobility management, or assist the UE in cell selection/reselection.

Example 1.3: downlink power allocation and uplink power control. The serving base station sends information such as approximate location of the UE, orientation of the UE, and/or received signal power of the UE to the LMF, and the LMF may return distance information between the terminal and the serving base station to assist the serving base station in downlink power allocation or uplink power control.

Example 1.4: uplink-downlink user scheduling, resource allocation, and interference management. Several neighboring base stations send information such as approximate location of the UE, orientation of the UE, and/or received signal power of the UE to the LMF, and the LMF may return distance information between the terminal and the base station to assist the serving base station in uplink-downlink user scheduling, resource allocation, and interference management.

2.2: For the second-type location-related information, the LMF directly feeds it back to the serving base station.

Step 3: after acquiring the above two types of location-related information, the first device (i.e. the serving base station) may use them to assist in completing or improving communication functions, such as channel estimation, handover, user scheduling, resource allocation, and assisted beamforming.

3.1: For the first-type location-related information, the serving base station may operate as follows.

Example 1.1: assisted beamforming. The serving base station determines a beam factor for downlink transmitting or a beam factor for uplink receiving based on terminal beam information sent by the LMF.

Example 1.2: mobility management (such as handover). The serving base station determines the target base station for handover based on information sent by the LMF about which base station is closest to the target UE, for subsequent handover processing.

3.2: For the second-type location-related information, the serving base station may operate as follows.

Example 2.1: the serving base station determines a channel estimation algorithm parameter by using the relative delay of multiple paths, UL SRS-RSRPP and UL AoA information, such as determining a time-frequency domain correlation matrix of an uplink MMSE channel estimation algorithm.

Example 2.2: the serving base station performs MU-MIMO scheduling based on the UL SRS-RSRP and UL AoA information, and schedules multiple UEs with sufficiently large UL SRS-RSRP and significant UL AoA angle discrimination together, for downlink MU-MIMO transmission.

Example 2.3: the serving base station performs user scheduling and time-frequency domain resource allocation based on UL SRS-RSRP and/or UL SRS-RSRPP values in combination with maximum criteria such as the SINR in communication channel measurement.

Embodiment II: the target UE requests the LMF (UE-assisted positioning).

Referring to FIG. 4, Embodiment II provides an example of an operation process when the first device is the target UE and the second device is the LMF (UE-assisted positioning).

In Embodiment II, it is UE-assisted positioning. The first device is the target UE, the second device is the LMF, and the location-related information includes the first-type location-related information and the second-type location-related information. That is, the serving base station requests the first-type location-related information and the second-type location-related information from the LMF. Positioning measurement quantity information in the second-type location-related information only includes the uplink positioning measurement quantity.

Step 1: the first device (i.e. the target UE) requests location-related information of the target UE from the second device (i.e. the LMF) to assist in improving communication performance. The requested location-related information includes the following two types of information.

1.1) The first-type location-related information is the location-related information of the target UE, including but not limited to: a beam direction of the target UE relative to the target base station, relative distance information of the target UE relative to the target base station, and information of the base station closest to the UE, used for serving cell handover, user scheduling, resource allocation, and assisted beamforming (beamforming). The first-type location-related information is not specific target UE location information.

1.2) The second-type location-related information is positioning measurement quantity information, which is used for accurate physical layer channel estimation, correction of a path loss formula for power control calculation, user scheduling, and resource allocation. The downlink positioning measurement quantity includes: DL RSTD, DL PRS-RSRP, DL PRS-RSRPP of multiple paths, etc.

Step 2: the second device (i.e. the LMF) determines the location-related information of the target UE according to the request from the first device (i.e. the target UE), and feeds back the location-related information of the target UE to the first device (i.e. the target UE).

2.1: For the first-type location-related information, the LMF performs internal processing on it and then feeds it back to the target UE.

Example 1.1: assisted beamforming. The base station actually needs to know angle information (beam information) of a LOS path from the terminal to the base station/TRP. The base station sends its own location/antenna array orientation information to the LMF, the LMF may send beam information of the target UE required by the base station to the base station, and the base station performs subsequent processing based on it.

Example 1.2: mobility management (such as handover or cell selection/reselection). Several neighboring base stations send information such as approximate location of the UE, orientation of the UE, and/or received signal power of the UE to the LMF. The LMF may return information about which base station is closest to the terminal (for example, the received signal strength RSRP value is the maximum) or the like to assist the base station in mobility management, or assist the UE in cell selection/reselection.

Example 1.3: downlink power allocation and uplink power control. The serving base station sends information such as approximate location of the UE, orientation of the UE, and/or received signal power of the UE to the LMF, and the LMF may return distance information between the terminal and the serving base station to assist the serving base station in downlink power allocation or uplink power control.

Example 1.4: uplink-downlink user scheduling, resource allocation, and interference management. Several neighboring base stations send information such as approximate location of the UE, orientation of the UE, and/or received signal power of the UE to the LMF, and the LMF may return distance information between the terminal and the base station to assist the serving base station in uplink-downlink user scheduling, resource allocation, and interference management.

2.2. For the second-type location-related information, the LMF directly feeds it back to the target UE.

Step 3: after acquiring the above two types of location-related information, the UE determines to assist in beamforming or channel estimation. For example, an uplink transmitting beam to the target base station is determined, or a downlink receiving beam for receiving a signal from the target base station signal is determined. For example, the UE determines a channel estimation algorithm parameter by using the relative delay of multiple paths, DL PRS-RSRPP of multiple paths, such as determining a time-frequency domain correlation matrix of a downlink MMSE channel estimation algorithm.

Embodiment III: the serving base station requests the JPAC (UE-assisted positioning).

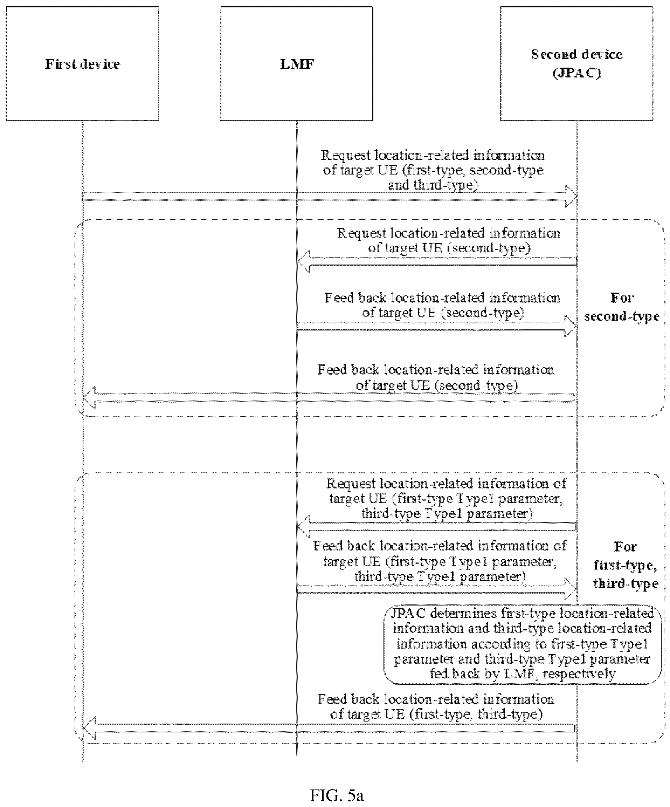

Referring to FIG. 5a, Embodiment III provides an example of an information transmission process for UE-assisted positioning when the first device is the serving base station and the second device is the JPAC.

In Embodiment III, it is UE-assisted positioning. The first device is the serving base station, the second device is the JPAC, and the location-related information includes the first-type, second-type and third-type of location-related information. Positioning measurement quantity information in the second-type location-related information only includes the downlink positioning measurement quantity. The JPAC may be a core network RAN device independent of the LMF and the serving base station, or the JPAC may not be a standalone entity, with its function undertaken by an existing entity such as the serving base station or the LMF.

Step 1: the first device (i.e. the serving base station) requests the location-related information of the target UE from the second device (i.e. the JPAC) to assist in improving the communication performance. The requested location-related information includes the following two types of information.

1.1) The first-type location-related information is the location-related information of the target UE, including but not limited to: a beam direction of the target UE relative to the target base station, relative distance information of the target UE relative to the target base station, and information of the base station closest to the UE, used for serving cell handover, user scheduling, resource allocation, and assisted beamforming (beamforming). The first-type location-related information is not specific target UE location information.

1.2) The second-type location-related information is positioning measurement quantity information, which is used for accurate physical layer channel estimation, correction of a path loss formula for power control calculation, user scheduling, and resource allocation. The downlink positioning measurement quantity includes: DL RSTD, DL PRS-RSRP, DL PRS-RSRPP of multiple paths, etc.

1.3) The third-type location-related information is accurate target UE location information, used for accurate handover, user scheduling, resource allocation, and assisted beamforming. The target UE location information is related to a supported 3GPP standard release, a positioning technical solution and wireless channel environment, and the positioning accuracy may be determined according to actual needs.

Step 2: the second device (i.e. the JPAC) determines the location-related information of the target UE according to the request message from the first device (i.e. the serving base station), and feeds back the location-related information of the target UE to the first device (i.e. the serving base station).

2.1: For the first-type location-related information, the JPAC acquires related base station location information from the LMF, performs internal processing on it, and then feeds it back to the serving base station or the UE.

Example 1.1: assisted beamforming. The base station actually needs to know angle information (beam information) of a LOS path from the terminal to the base station/TRP. The base station reports its own location/antenna array orientation information to the LMF and the LMF further forwards it to the JPAC. The JPAC may send beam information of the target UE required by the base station to the base station, and the base station performs subsequent processing.

Example 1.2: mobility management (such as handover or cell selection/reselection). Several neighboring base stations report information such as approximate location of the UE, orientation of the UE, and/or received signal power of the UE to the LMF and the LMF further forwards it to the JPAC. The JPAC may return information about which base station is closest to the terminal (for example, the received signal strength RSRP value thereof is the maximum) or the like to assist the serving base station in mobility management.

Example 1.3: downlink power allocation and uplink power control. The serving base station sends information such as approximate location of the UE, orientation of the UE, and/or received signal power of the UE to the LMF and the LMF further forwards it to the JPAC. The JPAC may return distance information between the terminal and the serving base station to assist the serving base station in downlink power allocation or uplink power control.

Example 1.4: uplink-downlink user scheduling, resource allocation, and interference management. Several neighboring base stations send information such as approximate location of the UE, orientation of the UE, and/or received signal power of the UE to the LMF and the LMF further forwards it to the JPAC. The JPAC may return distance information between the terminal and the base station to assist the serving base station in uplink-downlink user scheduling, resource allocation, and interference management.

2.2. For the second-type location-related information, the JPAC acquires it from the LMF and then forwards it to the serving base station.

2.3. For the third-type location-related information, the JPAC determines relatively accurate target UE location information (for UE-assisted positioning) according to uplink, downlink, and/or uplink-downlink positioning measurement quantities of the UE and/or the base station provided by the LMF. The JPAC may provide accurate location information of the target UE to the serving base station according to the user privacy request and authorization from the target UE. The following Examples 3.1-3.3 are applicable to UE-assisted positioning.

Example 3.1: according to an uplink positioning measurement quantity of the base station provided by the LMF and location information of the serving base station, the JPAC determines relatively accurate UE location information by using UL-TDOA, UL-AoA, and/or uplink E-CID positioning methods.

Example 3.2: according to a downlink positioning measurement quantity of the UE provided by the LMF and location information of the serving base station, the JPAC calculates relatively accurate UE location information by using DL-TDOA, DL-AoD, and/or downlink E-CID positioning methods.

Example 3.3: according to uplink-downlink positioning measurement quantities of the UE and the base station provided by the LMF and location information of the serving base station, the JPAC calculates relatively accurate UE location information by using a Multi-RTT positioning method.

Step 3: after acquiring the above two types of location-related information, the first device (i.e. the serving base station) may use them to assist in completing or improving communication functions, such as channel estimation, handover, user scheduling, resource allocation, and assisted beamforming.

3.1 For the first-type location-related information, the serving base station may operate as follows.

Example 1.1: assisted beamforming. The serving base station determines a beam factor for downlink transmitting or a beam factor for uplink receiving based on terminal beam information sent by the JPAC.

Example 1.2: mobility management (such as handover). The serving base station determines the target base station for handover according to information sent by the JPAC about which base station is closest to the target UE, for subsequent handover processing.

3.2. For the second-type location-related information, the serving base station may operate as follows.

Example 2.1: the serving base station determines a channel estimation algorithm parameter by using the relative delay of multiple paths, UL SRS-RSRPP and UL AoA information, such as determining a time-frequency domain correlation matrix of an uplink MMSE channel estimation algorithm.

Example 2.2: the serving base station performs MU-MIMO scheduling based on the UL SRS-RSRP and UL AoA information, and schedules multiple UEs with sufficiently large UL SRS-RSRP and significant UL AoA angle discrimination together, for downlink MU-MIMO transmission.

Example 2.3: the serving base station performs user scheduling and time-frequency domain resource allocation based on UL SRS-RSRP and/or UL SRS-RSRPP values in combination with maximum criteria such as the SINR in communication channel measurement.

3.3. For the third-type location-related information, the serving base station may perform accurate assisted beamforming, handover, user scheduling, and resource allocation.

Embodiment IV: the target UE requests the JPAC (UE-assisted positioning).

Referring to FIG. 5a, Embodiment IV provides an example of an information transmission process for UE-assisted positioning when the first device is the target UE and the second device is the JPAC.

In Embodiment IV, it is UE-assisted positioning. The first device is the target UE, the second device is the JPAC, and the location-related information includes the first-type, second-type and third-type of location-related information. Positioning measurement quantity information in the second-type location-related information includes uplink, downlink, and uplink-downlink positioning measurement quantities. The JPAC may be a core network RAN device independent of the LMF and the serving base stations, or the JPAC may not be a standalone entity, with its functions undertaken by an existing entity such as the serving base station or the LMF.

Step 1: the first device (i.e. the target UE) requests location-related information of the target UE from the second device (i.e. the JPAC) to assist in improving the communication performance. The requested location-related information includes the following two types of information.

1.1) The first-type location-related information is the location-related information of the target UE, including but not limited to: a beam direction of the target UE relative to the target base station, relative distance information of the target UE relative to the target base station, and information of the base station closest to the UE, used for serving cell handover, user scheduling, resource allocation, and assisted beamforming (beamforming). The first-type location-related information is not specific target UE location information.

1.2) The second-type location-related information is positioning measurement quantity information, which is used for accurate physical layer channel estimation, correction of a path loss formula for power control calculation, user scheduling, and resource allocation. The downlink positioning measurement quantity includes: DL RSTD, DL PRS-RSRP, DL PRS-RSRPP of multiple paths, etc. The uplink positioning measurement quantity includes: UL RTOA, UL AoA, UL SRS-RSRP, UL SRS-RSRP, where each measurement quantity includes those from the serving base station/cell/TRP and the neighboring base station/cell/TRP. The uplink-downlink positioning measurement quantities includes: UE transmitting and receiving time difference and base station transmitting and receiving time difference.

1.3) The third-type location-related information is accurate target UE location information, used for accurate handover, user scheduling, resource allocation, and assisted beamforming. The target UE location information is related to a supported 3GPP standard release, a positioning technical solution and wireless channel environment, such as the potential positioning accuracy of R15-R18 given in the above list of the embodiment.

Step 2: the second device (i.e. the JPAC) determines the location-related information of the target UE according to the request message from the first device (i.e. the target UE), and feeds back the location-related information of the target UE to the first device (i.e. the target UE).

2.1. For the first-type location-related information, the JPAC acquires related base station location information from the LMF, performs internal processing on it, and then feeds it back to the target UE. For example, an uplink transmitting beam from the target UE to the target base station is determined, or a downlink receiving beam for receiving a signal from the target base station is determined.

2.2. For the second-type location-related information, the JPAC acquires it from the LMF and then forwards it to the serving base station.

2.3. For the third-type location-related information, the JPAC calculates relatively accurate UE location information according to uplink-downlink positioning measurement quantities of the UE and/or the base station provided by the LMF, and the JPAC may provide accurate location information of the target UE to the serving base station according to the user privacy request and authorization from the UE.

Example 3.1: according to an uplink positioning measurement quantity provided by the JPAC and location information of the serving base station, the JPAC calculates relatively accurate UE location information by using UL-TDOA, UL-AoA and/or E-CID positioning methods.

Example 3.2: according to a downlink positioning measurement quantity provided by the JPAC and location information of the serving base station, the JPAC calculates relatively accurate UE location information by using DL-TDOA and/or DL-AoD positioning methods.

Example 3.3: according to uplink-downlink positioning measurement quantities and location information of the serving base station, the JPAC calculates relatively accurate UE location information by using a Multi-RTT positioning method.

Step 3: after acquiring the above three types of location-related information, the UE determines to assist in beamforming or channel estimation. For example, an uplink transmitting beam to the target base station is determined, or a downlink receiving beam for receiving a signal from the target base station is determined. For example, the UE determines a channel estimation algorithm parameter by using the relative delay of multiple paths, DL PRS-RSRPP of multiple paths, such as determining a time-frequency domain correlation matrix of a downlink MMSE channel estimation algorithm.

Embodiment V: the serving base station requests the JPAC (UE-based positioning).

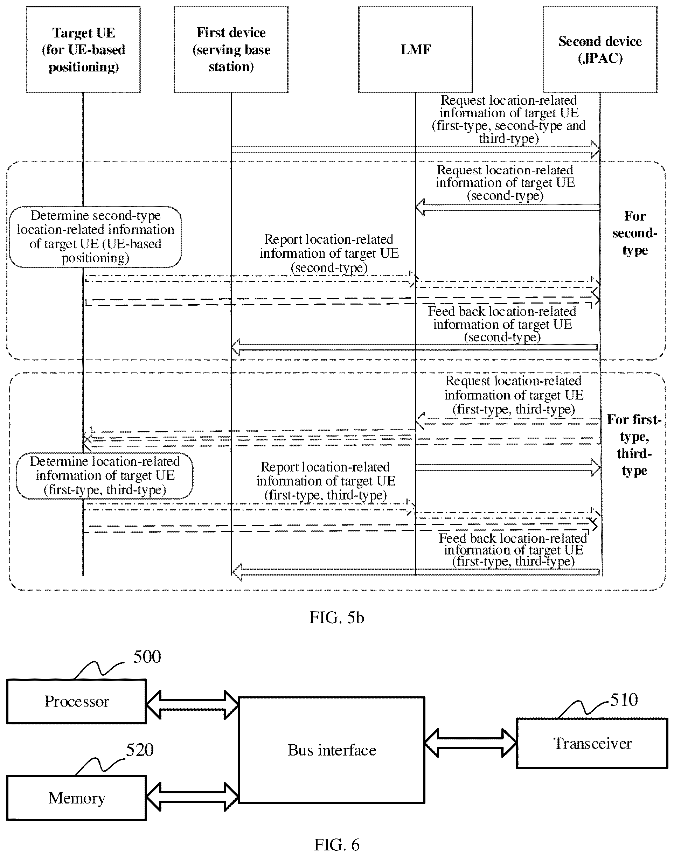

Referring to FIG. 5b, Embodiment V provides an example of an information transmission process for UE-based positioning when the first device is the serving base station and the second device is the JPAC.

In Embodiment III, it is UE-based positioning. The first device is the serving base station, the second device is the JPAC, and the location-related information includes the first-type, second-type and third-type of location-related information. Positioning measurement quantity information in the second-type location-related information only includes the downlink positioning measurement quantity. The JPAC may be a core network RAN device independent of the LMF and the serving base station, or the JPAC may not be a standalone entity, with its functions undertaken by an existing entity such as the serving base station or the LMF.

Step 1: the first device (i.e. the serving base station) requests the location-related information of the target UE from the second device (i.e. the JPAC) to assist in improving the communication performance. The requested location-related information includes the following two types of information.

1.1) The first-type location-related information is the location-related information of the target UE, including but not limited to: a beam direction of the target UE relative to the target base station, relative distance information of the target UE relative to the target base station, and information of the base station closest to the UE, used for serving cell handover, user scheduling, resource allocation, and assisted beamforming (beamforming). The first-type location-related information is not specific target UE location information.

1.2) The second-type location-related information is positioning measurement quantity information, which is used for accurate physical layer channel estimation, correction of a path loss formula for power control calculation, user scheduling, and resource allocation. The downlink positioning measurement quantity includes: DL RSTD, DL PRS-RSRP, DL PRS-RSRPP of multiple paths, etc.

1.3) The third-type location-related information is accurate target UE location information, used for accurate handover, user scheduling, resource allocation, and assisted beamforming. The target UE location information is related to a supported 3GPP standard release, a positioning technical solution and wireless channel environment, such as the potential positioning accuracy of R15-R18 given in the above list of the embodiment.

Step 2: the second device (i.e. the JPAC) acquires the location-related information of the target UE (for UE-based positioning) according to the request message from the first device (i.e. the serving base station), and feeds back the location-related information of the target UE to the first device (i.e. the serving base station).

For UE-based positioning, the second device (including the LMF and the JPAC) adopts at least two methods to acquire the location-related information of the target UE: first, the target UE reports the calculated three types of location-related information to the LMF through the LPP signaling (optionally, the LMF further forwards them to the JPAC entity); second, the target UE directly reports them to the JPAC entity, and when the JPAC entity is the serving base station, a reporting signaling is an NR RRC signaling.

2.1: For the first-type location-related information, the JPAC acquires related base station location information based on reporting by the target UE (for UE-based positioning), performs internal processing on it, and then feeds it back to the serving base station or the UE. Example 1.5 is applicable to UE-based positioning.

Example 1.5: in Examples 1.1-1.4 of Embodiment III, accurate UE location information is reported by the target UE to the second device (including the LMF and the JPAC). For example, at least two methods are used: first, the target UE reports the calculated three types of location-related information to the LMF through the LPP signaling, and then the LMF further forwards them to the JPAC entity; second, the target UE directly reports them to the JPAC entity.

2.2. For the second-type location-related information, the JPAC acquires it from the LMF or the target UE and then forwards it to the serving base station.

2.3. For the third-type location-related information, the JPAC acquires accurate location information of the target UE based on reporting by the target UE (for UE-based positioning). The JPAC may provide the accurate location information of the target UE to the serving base station according to the user privacy request and authorization from the target UE. For UE-based positioning, the JPAC acquires accurate target UE location information based on reporting by the target UE. The UE-based positioning method of the target UE may use a RAT-dependent positioning method such as DL-TDOA and DL-AoD in Example 3.2, or a RAT-independent positioning method such as A-GNSS, Sensor, WLAN, and TBS.

Step 3: after acquiring the above two types of location-related information, the first device (i.e. the serving base station) may use them to assist in completing or improving communication functions, such as channel estimation, handover, user scheduling, resource allocation, and assisted beamforming.

3.1 For the first-type location-related information, the serving base station may operate as follows.

Example 1.1: assisted beamforming. The serving base station determines a beam factor for downlink transmitting or a beam factor for uplink receiving based on terminal beam information sent by the JPAC.

Example 1.2: mobility management (such as handover). The serving base station determines the target base station for handover according to information sent by the JPAC about which base station is closest to the target UE, for subsequent handover processing.

3.2. For the second-type location-related information, the serving base station may operate as follows.

Example 2.1: the serving base station determines a channel estimation algorithm parameter by using the relative delay of multiple paths, UL SRS-RSRPP and UL AoA information, such as determining a time-frequency domain correlation matrix of an uplink

MMSE channel estimation algorithm.

Example 2.2: the serving base station performs MU-MIMO scheduling based on the UL SRS-RSRP and UL AoA information, and schedules multiple UEs with sufficiently large UL SRS-RSRP and significant UL AoA angle discrimination together, for downlink MU-MIMO transmission.

Example 2.3: the serving base station performs user scheduling and time-frequency domain resource allocation based on UL SRS-RSRP and/or UL SRS-RSRPP values in combination with maximum criteria such as the SINR in communication channel measurement.

3.3. For the third-type location-related information, the serving base station may perform accurate assisted beamforming, handover, user scheduling, and resource allocation.

Based on the same invention concept, the devices or apparatuses provided by the embodiments of the present disclosure are described in the following, and explanations or examples of the technical features that are same as, or corresponding to, those described in the above methods are not repeated hereinafter.

Referring to FIG. 6, as a network side device, an information transmission apparatus provided by embodiments of the present disclosure includes a processor 500, a memory 520, and a transceiver 510.

When the information transmission apparatus provided by the embodiments of the present disclosure serves as an information requesting party:
the processor 500 is configured to read a program in the memory 520 and perform the following process:
sending a request message, where the request message is used to acquire terminal location-related information used for assisting in improving communication performance of a new radio system;
acquiring the terminal location-related information.

In some embodiments, the terminal location-related information used for assisting in improving the communication performance of the new radio system includes at least one of first-type location-related information, second-type location-related information or third-type location-related information of a terminal for assisting in improving the communication performance of the new radio system.

In some embodiments, the first-type location-related information includes at least one of the following information:
beam information of a target terminal relative to a target base station; or,
distance of the target terminal relative to the target base station; or,
information of a base station closest to the target terminal.

In some embodiments, the second-type location-related information includes: positioning measurement quantities of different base stations reported by a target terminal, and/or a positioning measurement quantity of the target terminal reported by a base station.

In some embodiments, acquiring the terminal location-related information used for assisting in improving the communication performance of the new radio system includes:
acquiring the first-type location-related information and/or the second-type location-related information provided by a location management function entity;
or, acquiring at least one of the following information provided by a joint positioning and communication function entity: the first-type location-related information, the second-type location-related information, or the third-type location-related information.

In some embodiments, the processor is further configured to read the computer program in the memory and perform the following operation:
after acquiring the terminal location-related information used for assisting in improving the communication performance of the new radio system, performing processing related to improving the communication performance of the new radio system, based on the terminal location-related information used for assisting in improving the communication performance of the new radio system.

In some embodiments, performing the processing related to improving the communication performance of the new radio system, based on the terminal location-related information used for assisting in improving the communication performance of the new radio system, includes:
performing, by a serving base station of the terminal, at least one of the following operations for the terminal based on the terminal location-related information used for assisting in improving the communication performance of the new radio system: channel estimation, cell handover, user scheduling, resource allocation, or beamforming;
or, performing, by the terminal, at least one of the following operations based on the terminal location-related information used for assisting in improving the communication performance of the new radio system: beamforming, channel estimation, cell selection, or cell reselection.

When the information transmission apparatus provided by the embodiments of the present disclosure serves as an information feedback party:
the processor 500 is configured to read the program in the memory 520 and perform the following process:
receiving a request message;
determining or acquiring, according to the request message, terminal location-related information used for assisting in improving communication performance of a new radio system, and sending the terminal location-related information used for assisting in improving the communication performance of the new radio system to a device sending the request message.

In some embodiments, acquiring the terminal location-related information used for assisting in improving the communication performance of the new radio system includes:
locally reading the terminal location-related information that is preset and used for assisting in improving the communication performance of the new radio system; or,
directly acquiring the terminal location-related information that is reported by a terminal and used for assisting in improving the communication performance of the new radio system; or,
acquiring the terminal location-related information that is forwarded by a network entity and used for assisting in improving the communication performance of the new radio system, where the terminal location-related information forwarded by the network entity is reported by the terminal.

In some embodiments, determining the terminal location-related information used for assisting in improving the communication performance of the new radio system includes:
determining, directly and locally, the terminal location-related information used for assisting in improving the communication performance of the new radio system;
or, acquiring and using information provided by a network entity to determine the terminal location-related information used for assisting in improving the communication performance of the new radio system.

In some embodiments, the processor is further configured to read the computer program in the memory and perform the following operation:
providing, according to a user privacy request of a terminal and authorization information, location-related information of the terminal to a serving base station of the terminal.

The transceiver 510 is configured to receive and transmit data under control of the processor 500.

In FIG. 6, a bus architecture may include any number of interconnected buses and bridges, and specifically, various circuits of one or more processors represented by the processor 500 and a memory represented by the memory 520 are linked together. The bus architecture may also link various other circuits, such as a peripheral device, a voltage regulator, a power management circuit and the like, which are well known in the art and will thus not be further described here. A bus interface provides an interface. The transceiver 510 may be multiple elements, including a transmitter and a receiver, and provide a unit for communication with various other apparatuses on transmission media. These transmission media include a wireless channel, a wired channel, an optical cable and other transmission media. The processor 500 is responsible for managing the bus architecture and general processing, and the memory 520 can store data used by the processor 500 when executing operations.

The processor 500 may be a central processing unit (CPU), an application specific integrated circuit (Application Specific Integrated Circuit, ASIC), a field-programmable gate array (Field-Programmable Gate Array, FPGA), or a complex programmable logic device (Complex Programmable Logic Device, CPLD), and the processor may also adopt a multi-core architecture.

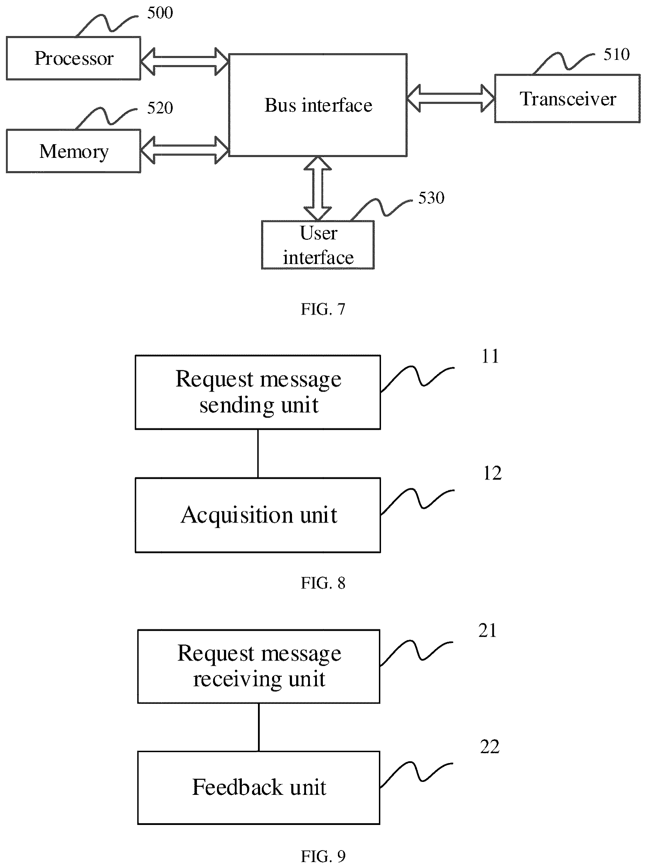

If used as a terminal side apparatus, referring to FIG. 7, the information transmission apparatus provided by the embodiments of the present disclosure further includes a user interface 530. For different user equipments, the user interface 530 may also be an interface that can be externally or internally connected to required devices, and the connected devices include but are not limited to a keyboard, a display, a speaker, a microphone, a joystick, etc.

It should be noted that the above apparatus provided by the embodiments of the present disclosure can implement all the method steps implemented by the above method embodiments, and can achieve the same technical effects. The part of these embodiments which is same as the method embodiments and the beneficial effects thereof will not be described in detail here.

It should be noted that the information transmission apparatus provided by the embodiments of the present disclosure may serve as both the information requesting party and the information feedback party, that is, it has the functions of both the information requesting party and the information feedback party mentioned above.

Referring to FIG. 8, embodiments of the present disclosure provide an information transmission apparatus on a first device (information requesting party) side, including:
a request message sending unit 11, configured to send a request message, where the request message is used to acquire terminal location-related information used for assisting in improving communication performance of a new radio system;
an acquisition unit 12, configured to acquire the terminal location-related information.

In some embodiments, the terminal location-related information used for assisting in improving the communication performance of the new radio system includes at least one of first-type location-related information, second-type location-related information or third-type location-related information of a terminal for assisting in improving the communication performance of the new radio system.

In some embodiments, the first-type location-related information includes at least one of the following information:
beam information of a target terminal relative to a target base station; or,
distance of the target terminal relative to the target base station; or,
information of a base station closest to the target terminal.

In some embodiments, the second-type location-related information includes: positioning measurement quantities of different base stations reported by a target terminal, and/or a positioning measurement quantity of the target terminal reported by a base station.

In some embodiments, acquiring the terminal location-related information used for assisting in improving the communication performance of the new radio system includes:
acquiring the first-type location-related information and/or the second-type location-related information provided by a location management function entity;
or, acquiring at least one of the following information provided by a joint positioning and communication function entity: the first-type location-related information, the second-type location-related information, or the third-type location-related information.

In some embodiments, the acquisition unit 12 is further configured to, after acquiring the terminal location-related information used for assisting in improving the communication performance of the new radio system, perform processing related to improving the communication performance of the new radio system, based on the terminal location-related information used for assisting in improving the communication performance of the new radio system.

In some embodiments, performing the processing related to improving the communication performance of the new radio system, based on the terminal location-related information used for assisting in improving the communication performance of the new radio system, includes:
performing, by a serving base station of the terminal, at least one of the following operations for the terminal based on the terminal location-related information used for assisting in improving the communication performance of the new radio system: channel estimation, cell handover, user scheduling, resource allocation, or beamforming;
or, performing, by the terminal, at least one of the following operations based on the terminal location-related information used for assisting in improving the communication performance of the new radio system: beamforming, channel estimation, cell selection, or cell reselection.

Referring to FIG. 9, an information transmission on a second device (information feedback party) side provided by embodiments of the present disclosure includes:
a request message receiving unit 21, configured to receive a request message;
a feedback unit 22, configured to determine or acquire, according to the request message, terminal location-related information used for assisting in improving communication performance of a new radio system, and send the terminal location-related information used for assisting in improving the communication performance of the new radio system to a device sending the request message.

In some embodiments, acquiring the terminal location-related information used for assisting in improving the communication performance of the new radio system includes:
locally reading the terminal location-related information that is preset and used for assisting in improving the communication performance of the new radio system; or,
directly acquiring the terminal location-related information that is reported by a terminal and used for assisting in improving the communication performance of the new radio system; or,
acquiring the terminal location-related information that is forwarded by a network entity and used for assisting in improving the communication performance of the new radio system, where the terminal location-related information forwarded by the network entity is reported by the terminal.

In some embodiments, determining the terminal location-related information used for assisting in improving the communication performance of the new radio system includes:
determining, directly and locally, the terminal location-related information used for assisting in improving the communication performance of the new radio system;
or, acquiring and using information provided by a network entity to determine the terminal location-related information used for assisting in improving the communication performance of the new radio system.

In some embodiments, the feedback unit 22 is further configured to:
provide, according to a user privacy request of a terminal and authorization information, location-related information of the terminal to a serving base station of the terminal.

It should be noted that the division of units in the embodiments of the present disclosure is schematic and is only a logical function division, and there may be other division manners in actual implementation. In addition, the functional units in the embodiments of the present disclosure may be integrated in one processing unit, or each unit may exist physically alone, or two or more units may be integrated in one unit. The above-mentioned integrated unit may be implemented in a form of hardware, or may be implemented in a form of a software functional unit.

If implemented in the form of the software functional unit and sold or used as an independent product, the integrated unit may be stored in a computer-readable storage medium. Based on this understanding, a technical solution of the present disclosure essentially or a part thereof that contributes to the prior art or all or part of the technical solution can be embodied in a form of a software product. The computer software product is stored in a storage medium and includes several instructions for making a computer device (which may be a personal computer, a server, or a network device, etc.) or a processor (processor) execute all or part of steps of the methods in the embodiments of the present disclosure. The aforementioned storage medium includes: a USB flash disk, a mobile hard disk, a read-only memory (Read-Only Memory, ROM), a random access memory (Random Access Memory, RAM), a magnetic disk, an optical disk or other media that can store program codes.

It should be noted here that the above apparatuses provided by the embodiments of the present disclosure can implement all the method steps implemented by the above method embodiments, and can achieve the same technical effects. The part of these embodiments which is same as the method embodiments and the beneficial effects thereof will not be described in detail here.

An embodiment of the present disclosure further provides a processor-readable storage medium, where the processor-readable storage medium stores a computer program, and the computer program is used to cause a processor to execute any method provided by the embodiments of the present disclosure.

The processor-readable storage medium may be any available medium or data storage device that the processor can access, including but not limited to, a magnetic memory (such as a floppy disk, a hard disk, a magnetic tape, a magneto-optical disk (MO), etc.), an optical memory (such as a CD, a DVD, a BD, an HVD, etc.), and a semiconductor memory (such as a ROM, an EPROM, an EEPROM, a non-volatile memory (NAND FLASH), a solid state disk (SSD)), etc.

An embodiment of the present disclosure further provides a computer program product or a computer program, and the computer program product or the computer program includes computer instructions stored in a computer-readable storage medium. A processor of a computer device reads the computer instructions from the computer-readable storage medium, executes the computer instructions, and causes the computer device to perform any method according to the embodiments of the present disclosure. The program product may adopt any combination of one or more readable media. The readable media may be readable signal media or readable storage media. The readable storage media may be, for example but not limited to, an electronic, magnetic, optical, electromagnetic, infrared or semiconductor system, apparatus or device, or any combination thereof. More specific examples of the readable storage media (non-exhaustive list) include: an electrical connection with one or more wires, a portable disk, a hard drive, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

It should be understood that:
the access technology through which entities in a communication network transmit traffic may be any suitable current or future technology, such as WLAN (wireless local access network), WiMAX (Worldwide Interoperability for Microwave Access), LTE, LTE-A, 5G, Bluetooth, infrared, etc.; in addition, the embodiments may also apply wired technologies, such as IP-based access technology, such as a wired network or a fixed line.

The embodiments suitable for being implemented as software code or a part thereof and running using a processor or processing function are independent of the software code and may be specified using any known or future-developed programming language, for example, using a high-level programming language, such as objective-C, C, C++, C #, Java, Python, Javascript, other scripting languages, etc., or a low-level programming language, such as a machine language or an assembler.

The implementation of the embodiments is hardware-independent and may be achieved using any known or future-developed hardware technology or any combination thereof, such as a microprocessor or a CPU (central processing units), a MOS (metal oxide semiconductor), a CMOS (complementary MOS), a BiMOS (bipolar MOS), a BiCMOS (bipolar CMOS), an ECL (emitter coupled logic), and/or a TTL (transistor-transistor logic).

The embodiments may be implemented as an individual device, apparatus, unit, component or function, or in a distributed manner. For example, one or more processors or processing functions may be used or shared in processing, or one or more processing segments or processing parts may be used and shared in processing, where one physical processor or more than one physical processors may be used to implement one or more processing parts dedicated to specific processing as described.

The apparatus may be implemented by a semiconductor chip, a chipset, or a (hardware) module including such chip or chipset.

The embodiments may also be implemented as any combination of hardware and software, such as an ASIC (Application Specific IC) component, a FPGA (field programmable gate array) or CPLD (complex programmable logic device) component, or a DSP (digital signal processor) component.

The embodiments may also be implemented as a computer program product, including a computer-usable medium embodying computer-readable program code, and the computer-readable program code is adapted to perform the processes described in the embodiments, and the computer-usable medium may be a non-transitory medium.

It should be understood by those skilled in the art that the embodiments of the present disclosure can be provided as methods, systems or computer program products. Therefore, the present disclosure may take forms of entire-hardware embodiments, entire-software embodiments, or embodiments combining software and hardware aspects. Furthermore, the present disclosure may take a form of a computer program product implemented on one or more computer-usable storage media (including but not limited to a magnetic disk storage, an optical storage, etc.) in which computer-usable program codes are included.

The present disclosure is described with reference to flowcharts and/or block diagrams of methods, devices (systems) and computer program products according to the embodiments of the present disclosure. It should be understood that each flow and/or block in the flowcharts and/or block diagrams, and a combination of flows and/or blocks in the flowcharts and/or block diagrams may be implemented by computer program instructions. These computer program instructions may be provided to a processor of a general-purpose computer, a special-purpose computer, an embedded processor or other programmable data processing devices to produce a machine, so that an apparatus for implementing functions specified in one or more flows of the flowcharts and/or one or more blocks of the block diagrams is produced by instructions executed by the processor of the computer or other programmable data processing devices.

These processor program instructions may also be stored in a computer-readable memory that can guide a computer or other programmable data processing devices to work in a specific way, so that the instructions stored in the computer-readable memory produce a manufactured product including an instruction apparatus, and the instruction apparatus implements functions specified in one or more flows of the flowcharts and/or one or more blocks of the block diagrams.

These processor program instructions may also be loaded on a computer or other programmable data processing devices, so that a series of operation steps are executed on the computer or other programmable devices to produce computer-implemented processing, whereby the instructions executed on the computer or other programmable devices provide steps for implementing functions specified in one or more flows of the flowcharts and/or one or more blocks of the block diagrams.

Obviously, those skilled in the art can make various modifications and variations to the present disclosure without departing from the spirit and scope of the present disclosure. Thus, if these modifications and variations of the present disclosure are within the scope of claims of the present disclosure and their equivalent technology, the present disclosure is also intended to include these modifications and variations.

## Claims

1. An information transmission method, **characterized by** comprising:
sending a request message, wherein the request message is used to acquire terminal location-related information used for assisting in improving communication performance of a new radio system;
acquiring the terminal location-related information.

2. The method according to claim 1, wherein the terminal location-related information used for assisting in improving the communication performance of the new radio system comprises at least one of first-type location-related information, second-type location-related information or third-type location-related information of a terminal for assisting in improving the communication performance of the new radio system.

3. The method according to claim 2, wherein the first-type location-related information comprises at least one of the following information:
beam information of a target terminal relative to a target base station; or,
distance of the target terminal relative to the target base station; or,
information of a base station closest to the target terminal.

4. The method according to claim 2, wherein the second-type location-related information comprises: positioning measurement quantities of different base stations reported by a target terminal, and/or a positioning measurement quantity of the target terminal reported by a base station.

5. The method according to claim 2, wherein acquiring the terminal location-related information used for assisting in improving the communication performance of the new radio system comprises:
acquiring the first-type location-related information and/or the second-type location-related information provided by a location management function entity;
or, acquiring at least one of the following information provided by a joint positioning and communication function entity: the first-type location-related information, the second-type location-related information, or the third-type location-related information.

6. The method according to claim 1, further comprising:
performing processing related to improving the communication performance of the new radio system, based on the terminal location-related information used for assisting in improving the communication performance of the new radio system.

7. The method according to claim 6, wherein performing the processing related to improving the communication performance of the new radio system, based on the terminal location-related information used for assisting in improving the communication performance of the new radio system, comprises:
performing, by a serving base station of the terminal, at least one of the following operations for the terminal based on the terminal location-related information used for assisting in improving the communication performance of the new radio system: channel estimation, cell handover, user scheduling, resource allocation, or beamforming;
or, performing, by the terminal, at least one of the following operations based on the terminal location-related information used for assisting in improving the communication performance of the new radio system: beamforming, channel estimation, cell selection, or cell reselection.

8. An information transmission method, **characterized by** comprising:
receiving a request message;
determining or acquiring, according to the request message, terminal location-related information used for assisting in improving communication performance of a new radio system, and sending the terminal location-related information used for assisting in improving the communication performance of the new radio system to a device sending the request message.

9. The method according to claim 8, wherein acquiring the terminal location-related information used for assisting in improving the communication performance of the new radio system comprises:
locally reading the terminal location-related information that is preset and used for assisting in improving the communication performance of the new radio system; or,
directly acquiring the terminal location-related information that is reported by a terminal and used for assisting in improving the communication performance of the new radio system; or,
acquiring the terminal location-related information that is forwarded by a network entity and used for assisting in improving the communication performance of the new radio system, wherein the terminal location-related information forwarded by the network entity is reported by the terminal.

10. The method according to claim 8, wherein determining the terminal location-related information used for assisting in improving the communication performance of the new radio system comprises:
determining, directly and locally, the terminal location-related information used for assisting in improving the communication performance of the new radio system;
or, acquiring and using information provided by a network entity to determine the terminal location-related information used for assisting in improving the communication performance of the new radio system.

11. The method according to claim 8, further comprising:
providing, according to a user privacy request of a terminal and authorization information, location-related information of the terminal to a serving base station of the terminal.

12. An information transmission apparatus, **characterized by** comprising a memory, a transceiver and a processor:
the memory is configured to store a computer program; the transceiver is configured to transceive data under control of the processor; the processor is configured to read the computer program in the memory and perform the following operations:
sending a request message, wherein the request message is used to acquire terminal location-related information used for assisting in improving communication performance of a new radio system;
acquiring the terminal location-related information.

13. The apparatus according to claim 12, wherein the terminal location-related information used for assisting in improving the communication performance of the new radio system comprises at least one of first-type location-related information, second-type location-related information or third-type location-related information of a terminal for assisting in improving the communication performance of the new radio system.

14. The apparatus according to claim 13, wherein the first-type location-related information comprises at least one of the following information:
beam information of a target terminal relative to a target base station; or,
distance of the target terminal relative to the target base station; or,
information of a base station closest to the target terminal.

15. The apparatus according to claim 13, wherein the second-type location-related information comprises: positioning measurement quantities of different base stations reported by a target terminal, and/or a positioning measurement quantity of the target terminal reported by a base station.

16. The apparatus according to claim 13, wherein acquiring the terminal location-related information used for assisting in improving the communication performance of the new radio system comprises:
acquiring the first-type location-related information and/or the second-type location-related information provided by a location management function entity;
or, acquiring at least one of the following information provided by a joint positioning and communication function entity: the first-type location-related information, the second-type location-related information, or the third-type location-related information.

17. The apparatus according to claim 12, wherein the processor is further configured to read the computer program in the memory and perform the following operation:
performing processing related to improving the communication performance of the new radio system, based on the terminal location-related information used for assisting in improving the communication performance of the new radio system.

18. The apparatus according to claim 17, wherein performing the processing related to improving the communication performance of the new radio system, based on the terminal location-related information used for assisting in improving the communication performance of the new radio system, comprises:
performing, by a serving base station of the terminal, at least one of the following operations for the terminal based on the terminal location-related information used for assisting in improving the communication performance of the new radio system: channel estimation, cell handover, user scheduling, resource allocation, or beamforming;
or, performing, by the terminal, at least one of the following operations based on the terminal location-related information used for assisting in improving the communication performance of the new radio system: beamforming, channel estimation, cell selection, or cell reselection.

19. An information transmission apparatus, **characterized by** comprising:
a memory, configured to store a computer program; a transceiver, configured to transceive data under control of a processor; the processor, configured to read the computer program in the memory and perform the following operations:
receiving a request message;
determining or acquiring, according to the request message, terminal location-related information used for assisting in improving communication performance of a new radio system, and sending the terminal location-related information used for assisting in improving the communication performance of the new radio system to a device sending the request message.

20. The apparatus according to claim 19, wherein acquiring the terminal location-related information used for assisting in improving the communication performance of the new radio system comprises:
locally reading the terminal location-related information that is preset and used for assisting in improving the communication performance of the new radio system; or,
directly acquiring the terminal location-related information that is reported by a terminal and used for assisting in improving the communication performance of the new radio system; or,
acquiring the terminal location-related information that is forwarded by a network entity and used for assisting in improving the communication performance of the new radio system, wherein the terminal location-related information forwarded by the network entity is reported by the terminal.

21. The apparatus according to claim 19, wherein determining the terminal location-related information used for assisting in improving the communication performance of the new radio system comprises:
determining, directly and locally, the terminal location-related information used for assisting in improving the communication performance of the new radio system;
or, acquiring and using information provided by a network entity to determine the terminal location-related information used for assisting in improving the communication performance of the new radio system.

22. The apparatus according to claim 19, wherein the processor is further configured to read the computer program in the memory and perform the following operation:
providing, according to a user privacy request of a terminal and authorization information, location-related information of the terminal to a serving base station of the terminal.

23. An information transmission apparatus, **characterized by** comprising:
a request message sending unit, configured to send a request message, wherein the request message is used to acquire terminal location-related information used for assisting in improving communication performance of a new radio system;
an acquisition unit, configured to acquire the terminal location-related information.

24. The apparatus according to claim 23, wherein the terminal location-related information used for assisting in improving the communication performance of the new radio system comprises at least one of first-type location-related information, second-type location-related information or third-type location-related information of a terminal for assisting in improving the communication performance of the new radio system.

25. The apparatus according to claim 24, wherein the first-type location-related information comprises at least one of the following information:
beam information of a target terminal relative to a target base station; or,
distance of the target terminal relative to the target base station; or,
information of a base station closest to the target terminal.

26. The apparatus according to claim 24, wherein the second-type location-related information comprises: positioning measurement quantities of different base stations reported by a target terminal, and/or a positioning measurement quantity of the target terminal reported by a base station.

27. The apparatus according to claim 24, wherein acquiring the terminal location-related information used for assisting in improving the communication performance of the new radio system comprises:
acquiring the first-type location-related information and/or the second-type location-related information provided by a location management function entity;
or, acquiring at least one of the following information provided by a joint positioning and communication function entity: the first-type location-related information, the second-type location-related information, or the third-type location-related information.

28. The apparatus according to claim 23, wherein the acquisition unit is further configured to:
perform processing related to improving the communication performance of the new radio system, based on the terminal location-related information used for assisting in improving the communication performance of the new radio system.

29. The apparatus according to claim 28, wherein performing the processing related to improving the communication performance of the new radio system, based on the terminal location-related information used for assisting in improving the communication performance of the new radio system, comprises:
performing, by a serving base station of the terminal, at least one of the following operations for the terminal based on the terminal location-related information used for assisting in improving the communication performance of the new radio system: channel estimation, cell handover, user scheduling, resource allocation, or beamforming;
or, performing, by the terminal, at least one of the following operations based on the terminal location-related information used for assisting in improving the communication performance of the new radio system: beamforming, channel estimation, cell selection, or cell reselection.

30. An information transmission apparatus, **characterized by** comprising:
a request message receiving unit, configured to receive a request message;
a feedback unit, configured to determine or acquire, according to the request message, terminal location-related information used for assisting in improving communication performance of a new radio system, and send the terminal location-related information used for assisting in improving the communication performance of the new radio system to a device sending the request message.

31. The apparatus according to claim 30, wherein acquiring the terminal location-related information used for assisting in improving the communication performance of the new radio system comprises:
locally reading the terminal location-related information that is preset and used for assisting in improving the communication performance of the new radio system; or,
directly acquiring the terminal location-related information that is reported by a terminal and used for assisting in improving the communication performance of the new radio system; or,
acquiring the terminal location-related information that is forwarded by a network entity and used for assisting in improving the communication performance of the new radio system, wherein the terminal location-related information forwarded by the network entity is reported by the terminal.

32. The apparatus according to claim 30, wherein determining the terminal location-related information used for assisting in improving the communication performance of the new radio system comprises:
determining, directly and locally, the terminal location-related information used for assisting in improving the communication performance of the new radio system;
or, acquiring and using information provided by a network entity to determine the terminal location-related information used for assisting in improving the communication performance of the new radio system.

33. The apparatus according to claim 30, wherein the feedback unit is further configured to:
provide, according to a user privacy request of a terminal and authorization information, location-related information of the terminal to a serving base station of the terminal.

34. A processor-readable storage medium, **characterized in that** the processor-readable storage medium stores a computer program, and the computer program is used to cause the processor to perform the method according to any one of claims 1 to 11.
